# EUROPEAN PATENT APPLICATION

(11) **EP 1 614 899 A1**
(43) Date of publication of application: **11.01.2006**
(21) Application number: 04015861.0
(22) Date of filing: 06.07.2004
(51) Int. Cl.: F04C 2/18, F16C 33/10, F04C 15/00

(54) **Shaft supporting bush for an external gear machine**

(71) Applicant: Vivoil Oleodinamica Vivolo S.r.l., 40138 Bologna (IT)
(72) Inventor: Vivolo, Domenico, 40065 Pianoro (Prov. Bologna) (IT)
(74) Representative: Modiano, Micaela Nadia

(57) **Abstract**

A shaft supporting bush (1) particularly for hydraulic pumps and motors, comprising a body (11), a cover (9), a base (10) and, in the body (11), a protruding shaft (3), an internal shaft (4) and two bushes (1) that are shaped substantially like a figure-of-eight and support the two shafts (3, 4) so that they can rotate in two holes (2). A groove (5) connects the two holes (2) that accommodate the shafts (3, 4) on one of the two flat surfaces of the bush (1) along the major axis thereof.

## Description

The present invention relates to a shaft supporting bush particularly for hydraulic motors and pumps.

Conventional gear-based motors and pumps comprise a body that is comprised between two heads and contains two bushes, an inner shaft and a protruding shaft, which are mutually parallel, and respective mutually meshing gears rigidly coupled to said shafts. The two bushes are designed to support and guide the shafts and also to provide retention on the sides of the gears.

Such retention is achieved by means of a self-balancing or compensation for recovery of axial plays.

Self-balancing is achieved by means of the action applied by the pressure of the oil which, by acting in areas delimited by gaskets (for balancing), generates an axial thrust on the bush, which contrasts proportionally the thrusts generated by the operating pressure of the pump or motor.

In practice, the manufacture of a hydraulic machine of the type described forces the manufacturer to use different components depending on the intended type of use: a pump in fact can be right-handed unidirectional, left-handed unidirectional, or reversible. In this last case the direction of rotation of the driving shaft can be reversed during operation. This necessarily entails outward draining, or requires the insertion of a valve which, fitted inside the pump, directs the drainage oil toward the low-pressure side of the pump; likewise, a motor can assume the same three configurations, which in this case depend on the oil flow.

In order to achieve axial balancing of the bushes, currently one of the following two constructive solutions is used. In a first case, the slots for the axial balancing gaskets are provided on one of the planes of both bushes, while the slots for the containment gaskets can be provided on the planes of the heads or on the planes of the body. In a second case, the slots for the axial balancing and containment gaskets are provided in the planes of the heads.

European patent application No. 03012289.9, in the name of the same Applicant, discloses a reversible hydraulic machine, the operation of which is based on the particular configuration of the heads.

The combination of suitable networks of slots, which are symmetrical and provided with a diamond-shaped external channel and with a figure-of-eight internal channel, mutually joined by radially arranged short portions in which a respective gasket is accommodated, with heads in which there are particular means for oil draining, allows total reversibility of the machine.

For some constructive solutions, the oil draining means can be ineffective because they are blocked or cannot be provided; since said means are provided on the head termed "cover", and since the head termed "base" substantially has no drainage means, for correct operation of the machine it is necessary to combine a base and a cover in each machine.

In particular for pumps that constitute the primary and intermediate stages of multiple pumps, instead of the cover there is a base, which is required for the transmission of motion and for fixing the next pump. Since there is no cover, there are no oil draining means suitable to discharge the pressure under the oil retainer.

The aim of the present invention is to obviate the above-cited drawbacks and meet the mentioned requirements, by providing a shaft supporting bush particularly for hydraulic motors and pumps that allows to adopt removable heads with symmetric gaskets that have no oil draining holes, for any type of hydraulic machine.

Within this aim, an object of the present invention is to provide a bush that is simple, relatively easy to provide in practice, safe in use, effective in operation, and has a relatively low cost.

This aim and this and other objects that will become better apparent hereinafter are achieved by the present shaft supporting bush particularly for hydraulic pumps and motors, of the type that comprises a body, a cover, a base and, in the body, a protruding shaft, an internal shaft and two bushes that are shaped substantially like a figure-of-eight and support the two shafts so that they can rotate in two holes, characterized in that a groove connects the two holes that accommodate the shafts on one of the two flat surfaces of said bush along the major axis thereof.

Further characteristics and advantages of the invention will become better apparent from the following detailed description of a preferred but not exclusive embodiment of a shaft supporting bush particularly for hydraulic motors and pumps, illustrated by way of nonlimiting example in the accompanying drawings, wherein:

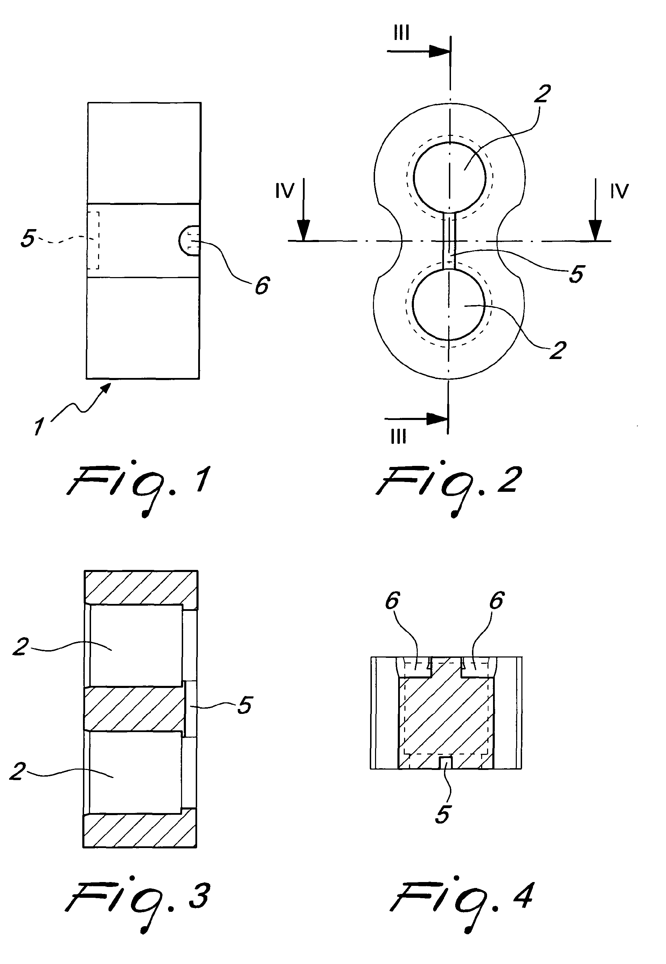

Figure 1 is a side view of a bush according to the invention;
Figure 2 is a top view of a bush according to the invention;
Figure 3 is a sectional view, taken along the line III-III of Figure 2;
Figure 4 is a sectional view, taken along the line IV-IV of Figure 2;
Figure 5 is a bottom view of a bush according to the invention, provided with a lateral hole;
Figure 6 is a side view of a bush according to the invention, provided with a lateral hole;
Figure 7 is a sectional view, taken along the line VII-VII of Figure 6;
Figure 8 is a top view of a bush according to the invention, provided with a lateral hole;
Figure 9 is a sectional view, taken along the line IX-IX of Figure 8;
Figure 10 is a sectional view, taken along a vertical plane that passes through the axes of the shafts, of a hydraulic machine provided with bushes according to the invention;
Figure 11 is a sectional view, taken along a vertical plane that passes through the axes of the shafts, of an intermediate pump for multiple pumps, provided with bushes according to the invention;
Figure 12 is a perspective view of a hydraulic machine provided with bushes according to the invention, during the first step of an operating cycle for reversing the direction of rotation;
Figure 13 is a perspective view of a hydraulic machine provided with bushes according to the invention, during the second step of an operating cycle for reversing the direction of rotation;
Figure 14 is a perspective view of a hydraulic machine provided with bushes according to the invention, during the third step of an operating cycle for reversing the direction of rotation;
Figure 15 is a perspective view of a hydraulic machine provided with bushes according to the invention, during the fourth step of an operating cycle for reversing the direction of rotation;
Figure 16 is a perspective view of a hydraulic machine provided with bushes according to the invention, during the last step of an operating cycle for reversing the direction of rotation.

With reference to the figures, the reference numeral 1 generally designates a shaft supporting bush, particularly for hydraulic motors and pumps.

The bush 1 is shaped like a figure-of-eight and has two parallel holes 2, which are suitable to accommodate a protruding shaft 3 and an internal shaft 4 of the hydraulic machine.

A groove 5 is provided on one of the two flat surfaces of the bush 1 and is aligned with the major axis of symmetry of the figure-of-eight at the region where the contour narrows, connecting the front end of the two holes 2.

Two lateral recesses 6 are provided on the opposite flat surface, at the region where the contour of the bush 1 tapers, and are designed to reduce the noise of the hydraulic machine in which they are to be installed.

The bush 1 can also have a lateral hole 7 that runs from the peripheral surface of the lateral central portion of the bush 1 beyond its centerline.

If the hole 7 is present, the groove is deeper in its central region 8, so as to affect the lateral hole: in this manner, the groove 2 and the lateral hole 7 constitute a duct that connects the front surface of the bush 1 to the lateral surface.

The hole 7 can be closed, if one wishes to convert a bush 1 provided with the hole 7 into a bush 1 that is not provided with the hole, by means of an appropriately provided plug (not shown in the figure): said plug can be for example screwed into the hole (which in this case must be threaded internally) in order to close it detachably.

Optionally, the bush 1 with the hole 7 can also provide for the insertion, in the hole 7, of a one-way valve (also not shown in the figure), which remains permanently installed within the hole 7, allowing the flow of oil from the groove 2 through the hole 7 to the lateral surface of the bush but preventing the reverse flow.

Operation is evident by describing the installation of the bushes 1 in some types of hydraulic machine.

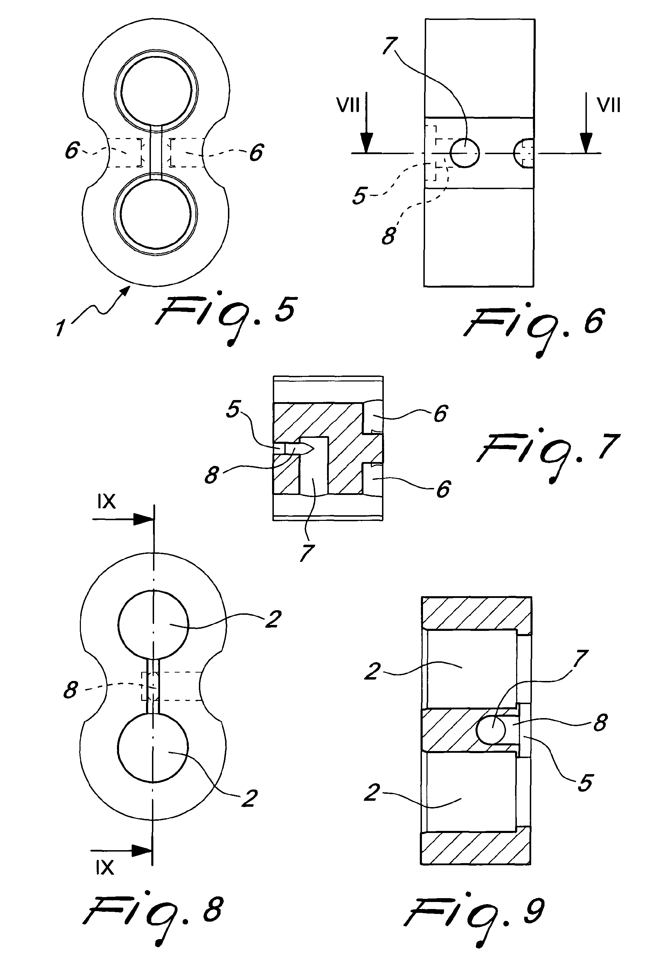

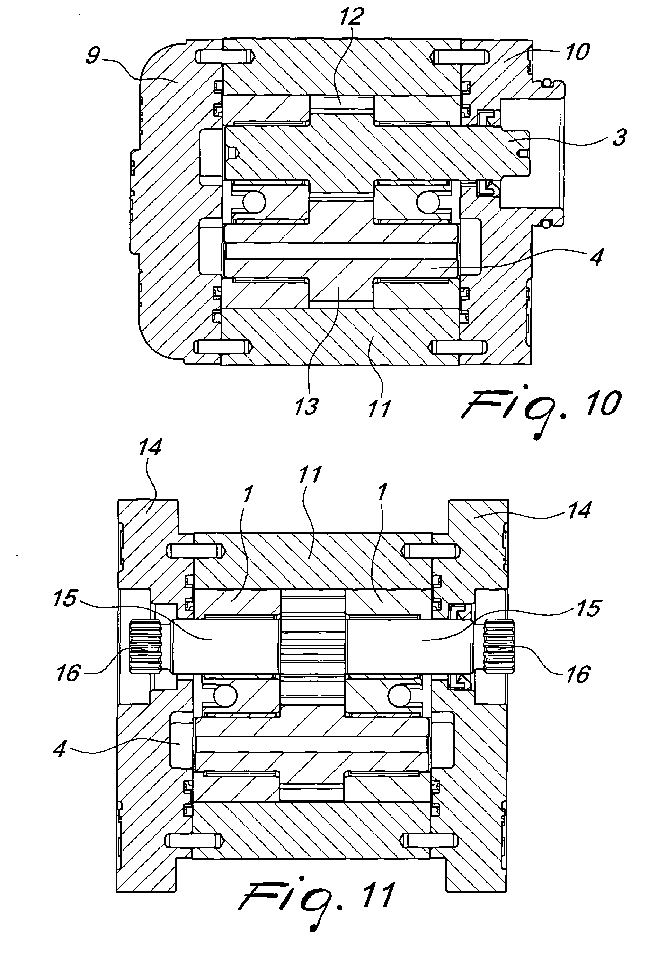

The bushes are fitted in a hydraulic machine as shown in Figure 10: a body 11, delimited between a cover 9 and a base 10, contains the two shafts 3 and 4, to which respective gears 12 and 13 are keyed. The shafts 3 and 4 are kept in the correct position by means of two bushes 1, of the type shown in Figure 5 (i.e., provided with the lateral hole 7). The oil that seeps along the shaft 3 or 4 that is located on the high-pressure side reaches the low-pressure side through the hole 7: the machine thus provides drainage without requiring the provision of holes in the cover 9 or in the base 10.

If it is necessary to provide intermediate pumps for multiple pumps, one must bear in mind that there is no cover 9, since the intermediate pump is cascade-connected to the preceding pump on one side and to the subsequent pump on the opposite side.

In practice, there are two heads 14 so as to delimit a body 11 that is fully similar to the body of the case described earlier. In this case, the protruding shaft 15 protrudes from both heads 14 and has, at its ends, appropriately provided sets of teeth 16 in order to couple to the shaft of the contiguous stage. The use of the bushes 1, by not requiring holes on the heads to drain the seeping oil, allows to couple the heads of the various stages directly, without requiring additional work to provide a passage for the drained oil.

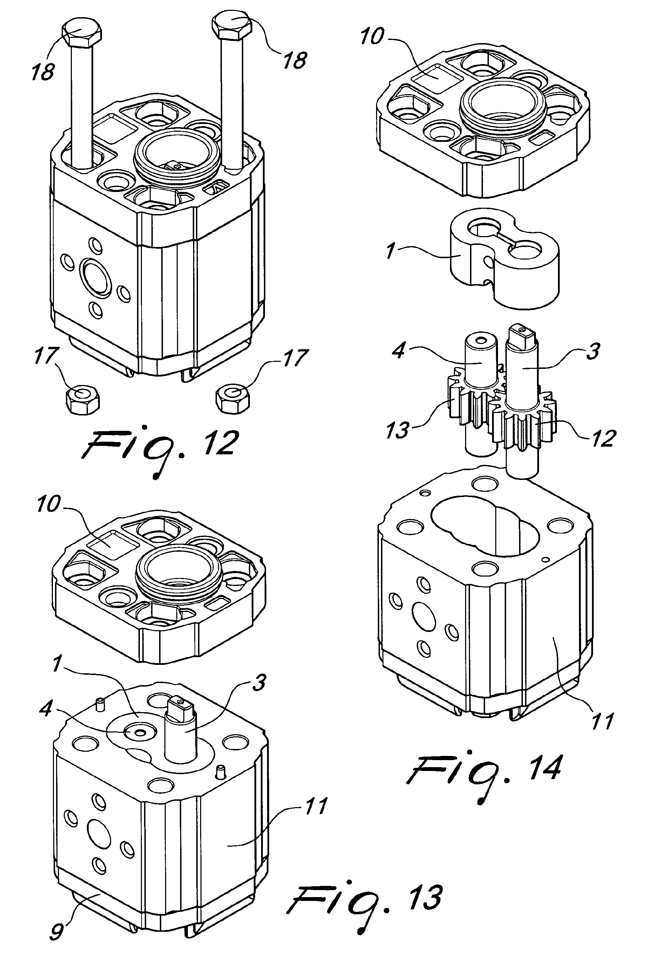

If it is necessary to change the direction of rotation of the hydraulic machine, it is necessary to perform the operations described in Figures 12 to 16.

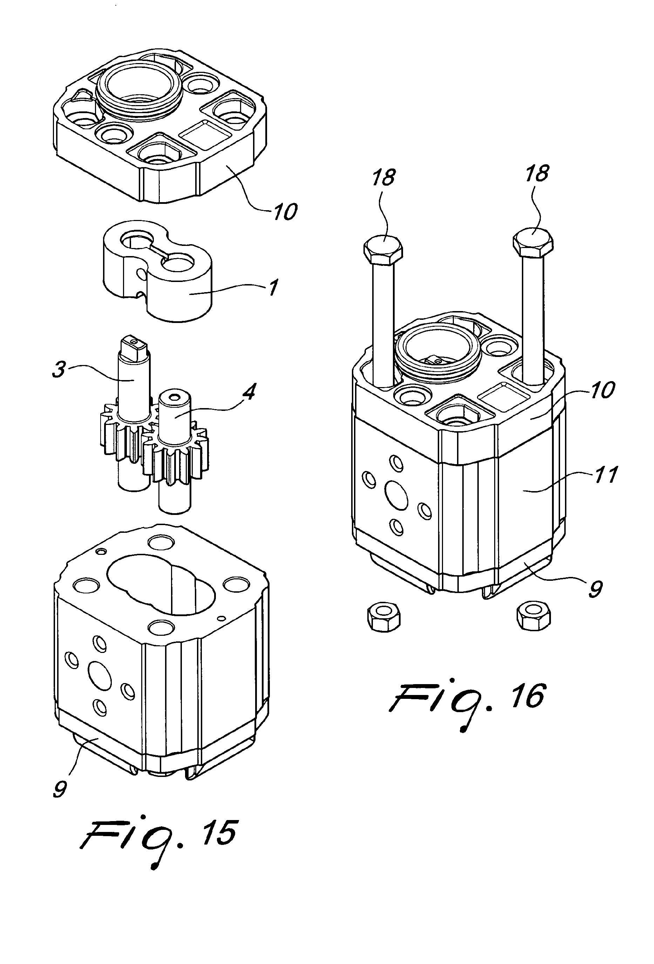

First of all, it is necessary to unscrew the nuts 17 and remove the screws 18 (Figure 12) and separate the base 10 from the body 9 (Figure 13). Then the bush 1 and the shafts 3 and 4 with the respective keyed gears 12 and 13 are extracted (Figure 14). It is necessary to rotate the base 10 and the pair of shafts 3 and 4 through 180°, keeping motionless the bush 1 and the body 9 (Figure 15), and to reinsert them into the body 9, subsequently closing again the base 10 on the body 9 by means of the screws 18 and the nuts 17 (Figure 16).

It has thus been shown that the invention achieves the intended aim and object.

The invention thus conceived is susceptible of numerous modifications and variations, all of which are within the scope of the appended claims.

All the details may further be replaced with other technically equivalent ones.

In the cited embodiments, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shaft supporting bush particularly for hydraulic pumps and motors, of the type that comprises a body (11), a cover (9), a base (10) and, in the body (11), a protruding shaft (3), an internal shaft (4) and two bushes (1) that are shaped substantially like a figure-of-eight and support the two shafts (3, 4) so that they can rotate in two holes (2), **characterized in that** a groove (5) connects the two holes (2) that accommodate the two shafts (3, 4) on one of the two flat surfaces of said bush (1) along the major axis thereof.

2. The bush according to claim 1, **characterized in that** transversely to said bush (1) there is a lateral hole (7) that reaches the centerline of said bush (1), said groove (5) being deeper at its central portion (8), affecting thereat the end portion of said through hole (7).

3. The bush according to claim 2, **characterized in that** it is possible to lock, inside said lateral hole (7), a closure plug whose shape and dimensions are complementary to those of said hole.

4. The bush according to claim 2 and as an alternative to claim 3, **characterized in that** it is possible to lock, inside said lateral hole (7), a one-way valve whose shapes and dimensions are complementary to those of said hole.

5. The bush according to claim 4, **characterized in that** said one-way valve is mounted with an orientation that allows the passage of oil from the groove (5), through the hole (7), to the portion of the hydraulic machine that the hole (7) faces, and prevents the reverse flow.

6. The bush according to claim 1, **characterized in that** it is mounted, inside said hydraulic machine, so that the surface provided with the groove (5) is directed toward the head (14) and the opposite surface is proximate to gears (12, 13), which are keyed onto said shafts (3, 4).

7. The bush according to claim 6, **characterized in that** said groove (5) faces an oil retainer and said lateral hole (7) is connected to the low-pressure portion of the hydraulic machine.

8. The bush according to one or more of the preceding claims, **characterized in that** it has, on the flat surface that lies opposite the one affected by said groove (5), at the centerline region, symmetric recesses of reduced depth, which are mutually separated by a flap that is aligned with the major axis of the bush (1).

## Amended claims

### Amended claims in accordance with Rule 86(2) EPC.

**1.** A shaft supporting bush particularly for hydraulic pumps and motors, of the type that comprises a body (11), a cover (9), a base (10) and, in the body (11), a protruding shaft (3), an internal shaft (4) and two bushes (1) that are shaped substantially like a figure-of-eight and able to support said two shafts (3, 4) so that they can rotate in two holes (2), further comprising a groove (5) which connects the said two holes (2) that are able to accommodate the two shafts (3, 4) on one of the two flat surfaces of said bush (1) along the major axis thereof **characterized in that** transversely to said bush (1) there is a lateral hole (7) that reaches the centerline of said bush (1), said groove (5) being deeper at its central portion (8), affecting thereat the end portion of said through hole (7) and adapted to be mounted so that the surface provided with the groove (5) is directed toward the head (14) and the opposite surface is proximate to gears (12, 13), which are keyed onto said shafts (3, 4).

**2.** The bush according to claim 1, **characterized in that** it is possible to lock, inside said lateral hole (7), a closure plug whose shape and dimensions are complementary to those of said hole.

**3.** The bush according to claim 1, **characterized in that** it is possible to lock, inside said lateral hole (7), a one-way valve whose shapes and dimensions are complementary to those of said hole.

**4.** The bush according to claim 3, **characterized in that** said one-way valve is mounted with an orientation that allows the passage of oil from the groove (5), through the hole (7), to the portion of the hydraulic machine that the hole (7) faces, and prevents the reverse flow.

**5.** The bush according to claim 1, **characterized in that** it is mounted, inside said hydraulic machine, so that the surface provided with the groove (5) is directed toward the head (14) and the opposite surface is proximate to gears (12, 13), which are keyed onto said shafts (3, 4).

**6.** The bush according to claim 5, **characterized in that** said groove (5) faces an oil retainer and said lateral hole (7) is connected to the low-pressure portion of the hydraulic machine.

**7.** The bush according to one or more of the preceding claims, **characterized in that** it has, on the flat surface that lies opposite the one affected by said groove (5), at the centerline region, symmetric recesses of reduced depth, which are mutually separated by a flap that is aligned with the major axis of the bush (1).
